(19) Europäisches Patentamt
European Patent Office
Office européen des brevets

(11) **EP 3 251 936 B1**

(12) **EUROPÄISCHE PATENTSCHRIFT**

(45) Veröffentlichungstag und Bekanntmachung des Hinweises auf die Patenterteilung:
**08.07.2020   Patentblatt 2020/28**

(51) Int Cl.:
**B62M 6/45** *(2010.01)*     **B62M 6/50** *(2010.01)*
**B62M 6/55** *(2010.01)*

(21) Anmeldenummer: **17169664.4**

(22) Anmeldetag: **05.05.2017**

(54) **STEUERUNGSVERFAHREN UND VORRICHTUNG ZUR REGELUNG DES ELEKTROMOTORS FÜR DIE SCHIEBEHILFE EINES ELEKTROFAHRRADS**

CONTROL METHOD AND DEVICE FOR REGULATING THE ELECTRIC MOTOR FOR THE PUSHING AID OF AN ELECTRIC BICYCLE

PROCÉDÉ DE COMMANDE ET DISPOSITIF DE RÉGLAGE DU MOTEUR ÉLECTRIQUE POUR L'AIDE À LA TRACTION D'UN VÉLO ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016   DE 102016209560**

(43) Veröffentlichungstag der Anmeldung:
**06.12.2017   Patentblatt 2017/49**

(73) Patentinhaber: **Robert Bosch GmbH**
**70442 Stuttgart (DE)**

(72) Erfinder:
• **Greiner, Rinaldo**
**72762 Reutlingen (DE)**
• **Baumgaertner, Daniel**
**72070 Tuebingen (DE)**

(56) Entgegenhaltungen:
**EP-A2- 1 236 640     FR-A1- 2 768 991**

EP 3 251 936 B1

**Beschreibung**

Die vorliegende Erfindung betrifft ein Steuerungsverfahren für einen Elektromotor zur Regelung der Schiebehilfe eines Elektrofahrrads sowie eine Vorrichtung, welche dazu eingerichtet ist, dieses Verfahren durchzuführen. Die Erfindung betrifft außerdem ein Elektrofahrrad mit der erfindungsgemäßen Vorrichtung.

Stand der Technik

In den Schriften DE 20 2005 018 126 U1 und DE 20 2005 006 684 U1 sind eine Anfahr- bzw. Schiebehilfe für ein Elektrofahrrad beschrieben. Eine solche Anfahr- bzw. Schiebehilfe wird typischerweise durch das Betätigen eines Schalters bzw. eines Drehgriffs am Lenker gestartet. Das Elektrofahrrad wird dadurch ohne Trittunterstützung des Radfahrers mittels eines Drehmoments des Elektromotors bis zu einer Maximalgeschwindigkeit für eine Schiebehilfe beschleunigt. Die Maximalgeschwindigkeit für eine Schiebehilfe ist beispielsweise in Deutschland gesetzlich vorgegeben und beträgt 6 km/h. Das erzeugte Drehmoment zur Realisierung der Schiebehilfe ist in den zitierten Schriften unabhängig vom Neigungswinkel des Elektrofahrrads, so dass beispielsweise physisch beeinträchtigte Personen Schwierigkeiten haben der Schiebehilfe an einer Steigung der Fahrtstrecke zu folgen oder im umgekehrten Fall, eine zu niedrige Geschwindigkeit der Schiebehilfe am Hang resultiert.

Die Schrift FR 2 768 991 A1 offenbart ein Fahrrad mit einem Motor und einer Schiebehilfe mit den Verfahrens-Merkmalen der Präambel des Anspruchs 1.

Das Dokument EP 1 236 640 A2 offenbart ein Steuergerät für ein motorisch unterstütztes Fahrrad.

Offenbarung der Erfindung

Die vorliegende Erfindung betrifft ein Steuerungsverfahren für einen Elektromotor zur Regelung der Schiebehilfe des Elektrofahrrads in Abhängigkeit eines erfassten Neigungswinkels des Elektrofahrrads bezogen auf die Querachse des Elektrofahrrads sowie eine Vorrichtung, welche dazu eingerichtet ist dieses Verfahren durchzuführen. Die Erfindung betrifft außerdem ein Elektrofahrrad mit der erfindungsgemäßen Vorrichtung. Die Schiebehilfe kann auch als Anfahrhilfe verwendet werden.

Das Steuerungsverfahren weist eine Erkennung einer Aktivierung der Schiebehilfe auf. Ist die Schiebehilfe aktiviert, wird ein aktueller Neigungswinkel des Elektrofahrrads um die Querachse des Elektrofahrrads erfasst. Der erfasste Neigungswinkel bezogen auf die Querachse, welche senkrecht zur Längsachse und senkrecht zur Hochachse des Elektrofahrrads angeordnet ist, repräsentiert die aktuelle Steigung bzw. das Gefälle einer Fahrtstrecke in Fahrtrichtung. Anschließend erfolgt eine Ermittlung einer Zielgeschwindigkeit für die Schiebehilfe in Abhängigkeit des erfassten Neigungswinkels und der Maximalgeschwindigkeit für die Schiebehilfe. Die ermittelte Zielgeschwindigkeit ist kleiner oder gleich der Maximalgeschwindigkeit, welche bevorzugt die gesetzlich vorgegebene Grenzgeschwindigkeit für die Schiebehilfe repräsentiert. Die Regelung des Elektromotors erfolgt in Abhängigkeit der ermittelten Zielgeschwindigkeit. Durch das Steuerungsverfahren wird die Geschwindigkeit der Schiebehilfe somit an die aktuelle Steigung einer Fahrtstrecke angepasst. Dadurch wird das Schieben eines schweren Elektrofahrrads an einer Steigung der Fahrtstrecke erleichtert bzw. komfortabler.

Zudem wird eine Beschleunigung des Elektrofahrrads in Richtung der Hochachse erfasst. Auf einem unebenen Untergrund sind die erfassten Beschleunigungen in Richtung der Hochachse größer als auf einem ebenen Untergrund. Die erfasste Beschleunigung repräsentiert damit den Untergrund einer Fahrtstrecke. Die Ermittlung der Zielgeschwindigkeit für die Schiebehilfe erfolgt in dieser Ausgestaltung zusätzlich in Abhängigkeit der erfassten Beschleunigung in Richtung der Hochachse. Die Geschwindigkeit der Schiebehilfe, welche durch die Regelung des Elektromotors resultiert, wird damit an den Untergrund der Fahrtstrecke angepasst.

Die erfindungsgemäße Vorrichtung umfasst wenigstens eine Recheneinheit. Diese Recheneinheit führt das Steuerungsverfahren aus. Die Recheneinheit erkennt eine Aktivierung der Schiebehilfe. Diese Erkennung kann beispielsweise mittels einer Auswertung von durch Sensoren erfassten Bewegungsgrößen des Elektrofahrrads oder durch eine manuelle Eingabe des Radfahrers erfolgen. Im Anschluss erfasst die Recheneinheit eine Größe, welche den aktuellen Neigungswinkel des Elektrofahrrads bezogen auf die Querachse des Elektrofahrrads repräsentiert. Optional kann die Recheneinheit auch eine weitere Größe, welche die Beschleunigung des Elektrofahrrads in Richtung der Hochachse repräsentiert, erfassen. Die Recheneinheit erzeugt außerdem ein Steuerungssignal zur Anpassung der Geschwindigkeit der Schiebehilfe in Abhängigkeit des erfassten Neigungswinkels. Zusätzlich wird das Steuerungssignal auch in Abhängigkeit der erfassten Beschleunigung in Richtung der Hochachse erzeugt. Die Vorrichtung ist beispielsweise ein Steuergerät.

Das erfindungsgemäße Elektrofahrrad umfasst den Elektromotor zum Antrieb des Elektrofahrrads sowie einen Sensor zum Erfassen einer Größe, welche den aktuellen Neigungswinkel des Elektrofahrrads um die Querachse des Elektrofahrrads repräsentiert. Zudem weißt das Elektrofahrrad einen weiteren Sensor zum Erfassen der aktuellen Beschleunigung des Elektrofahrrads in Richtung der Hochachse des Elektrofahrrads auf. Das Elektrofahrrad umfasst außerdem die erfindungsgemäße Vorrichtung zur Regelung des Elektromotors, insbesondere als Steuergerät.

Kurze Beschreibung der Zeichnungen

Die vorliegende Erfindung wird nachfolgend anhand bevorzugter Ausführungsformen und beigefügter Zeichnungen erläutert.

Figur 1:     Elektrofahrrad an einer Steigung einer Fahrtstrecke

Figur 2:     Ablaufdiagramm des Steuerungsverfahrens zur Schiebehilfe

Figur 3:     Erfindungsgemäße Vorrichtung als Steuergerät

Ausführungsbeispiele

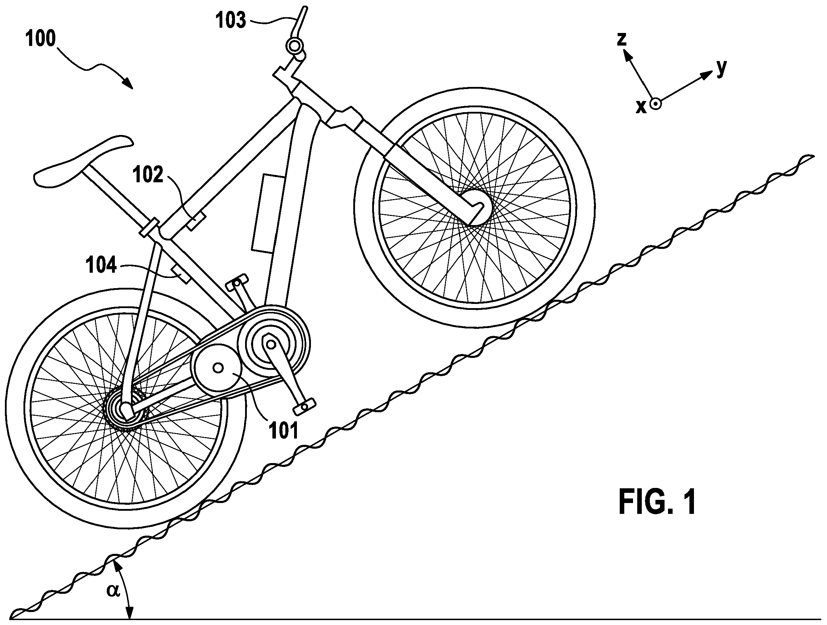

In Figur 1 ist ein Elektrofahrrad an einer Steigung skizziert. Der Neigungswinkel $\alpha$ des Elektrofahrrads um dessen Querachse ist in der Figur 1 zwischen der Horizontalen und der Fahrtstrecke dargestellt. Ein Steuergerät 103 am Elektrofahrrad 100 steuert einen Elektromotor 101 an. Das Steuergerät 103 ist eine Vorrichtung, welche dazu eingerichtet ist, das erfindungsgemäße Verfahren durchzuführen. Der Neigungswinkel $\alpha$ des Elektrofahrrads bezogen auf die Querachse wird durch einen Sensor 102 am Elektrofahrrad erfasst. Der Sensor 102 kann beispielsweise ein Neigungssensor, ein Beschleunigungssensor und/oder eine inertiale Messeinheit sein.

In Figur 1 ist das Elektrofahrrad 100 außerdem auf einem unebenen Untergrund dargestellt. Eine Beschleunigung $a_z$ des Elektrofahrrads 100 in Richtung der Hochachse des Elektrofahrrads 100 kann durch einen optionalen Sensor 104 beim Fahren erfasst werden. Der optionale Sensor 104 kann beispielsweise ein Beschleunigungssensor oder eine inertiale Messeinheit sein. Für einen unebenen Untergrund resultieren größere Beschleunigungen $a_z$ des Elektrofahrrads 100 in Richtung der Hochachse des Elektrofahrrads 100, so dass die erfassten Beschleunigungen $a_z$ den Untergrund der Fahrtstrecke repräsentieren. Das Schieben eines schweren Elektrofahrrads 100 wird an einer Steigung der Fahrtstrecke durch einen unebenen Untergrund zusätzlich erschwert.

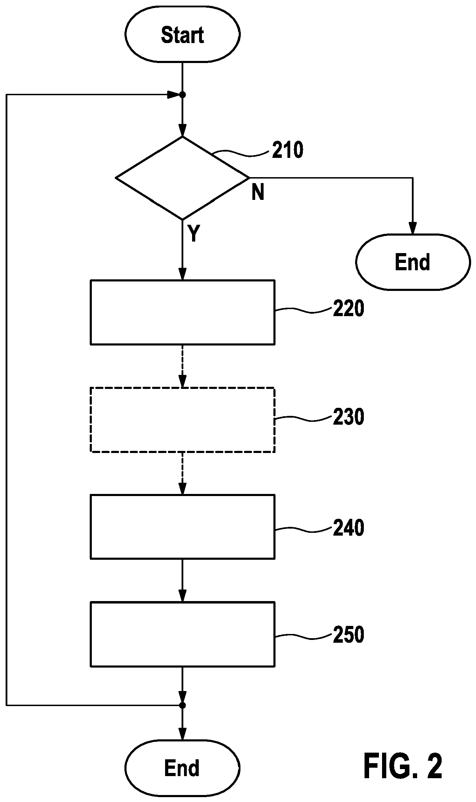

In Figur 2 ist ein Ablaufdiagramm des erfindungsgemäßen Steuerungsverfahrens dargestellt. Zunächst erfolgt eine Erkennung 210 einer Aktivierung der Schiebehilfe. Wenn keine Aktivierung erkannt worden ist, werden die weiteren Schritte des Steuerungsverfahrens zur Schiebehilfe nicht durchgeführt und das Verfahren wird beendet. Die Erkennung 210 kann beispielsweise durch das Erfassen einer Eingabe des Radfahrers, das Drücken eines Schalters sowie durch eine Bewegung des Fahrrads ohne Trittfrequenz und Gewichtsbelastung auf dem Sattel erfolgen. Wenn die Aktivierung der Schiebehilfe erkannt worden ist, folgt in einem weiteren Schritt die Erfassung 220 des Neigungswinkels $\alpha$ des Elektrofahrrads 100 um die Querachse. Optional wird im weiteren Schritt 230 des Steuerungsverfahrens vor der Ermittlung der Zielgeschwindigkeit 240, wie in Figur 1 und Figur 2 dargestellt, eine Beschleunigung $a_z$ des Elektrofahrrads 100 in Richtung der Hochachse des Elektrofahrrads 100 erfasst. Die Beschleunigung $a_z$ des Elektrofahrrads 100 in Richtung der Hochachse ist auf einem unebenen Untergrund der Fahrtstrecke größer als auf einer ebenen Strecke, so dass auf einem Waldweg größere Beschleunigungswerte als auf einer asphaltierten Straße resultieren.

Im nachfolgenden Schritt 240 wird eine Zielgeschwindigkeit $v_{Ziel}$ der Schiebehilfe in Abhängigkeit des erfassten Neigungswinkels $\alpha$ und einer Maximalgeschwindigkeit $v_{max}$ ermittelt. Für die Schiebehilfe des Elektrofahrrads 100 ist in der Regel eine länderspezifische Maximalgeschwindigkeit $v_{max}$ gesetzlich vorgeschrieben. In Deutschland liegt die Maximalgeschwindigkeit $v_{max}$ bei 6 km/h. Bevorzugt erfolgt die Ermittlung 240 der Zielgeschwindigkeit $v_{Ziel}$ durch eine Reduktion der Maximalgeschwindigkeit $v_{max}$ in Abhängigkeit des betragsmäßigen Neigungswinkels $\alpha$ und einem Faktor k, siehe Gleichung (1). Der Faktor k kann konstant oder abhängig vom erfassten Neigungswinkel $\alpha$ um die Querachse sein.

$$v_{Ziel}(v_{max}, \alpha) = v_{max} - k \cdot |\alpha| \qquad\qquad (1)$$

In einer weiteren, alternativen Ausgestaltung ist der Faktor k abhängig vom Neigungswinkelbereich, siehe Gleichung 2. So resultiert beispielsweise bei $k_1 < k_2$ für das Schieben bergab, d.h. einen Neigungswinkel $\alpha$ kleiner Null, eine größere Zielgeschwindigkeit $v_{Ziel}$ der Schiebehilfe als für einen betragsmäßig gleichen Neigungswinkel $\alpha$ bergauf, d.h. größer Null.

$$v_{Ziel}\left(v_{\max},\alpha\right)=\begin{cases}v_{\max}-k_1\cdot|\alpha| & \textit{für} \quad \alpha\leq 0° \\ v_{\max}-k_2\cdot\alpha & \textit{für} \quad \alpha>0°\end{cases} \qquad (2)$$

Optional erfolgt die Ermittlung 240 der Zielgeschwindigkeit $v_{Ziel}$ zusätzlich in Abhängigkeit der erfassten Beschleunigung $a_z$ des Elektrofahrrads 100 in Richtung der Hochachse des Elektrofahrrads 100. Die Ermittlung 240 der Zielgeschwindigkeit $v_{Ziel}$ wird beispielsweise durch Reduktion der Maximalgeschwindigkeit in Abhängigkeit eines Faktors h und einer statistischen Auswertung der erfassten Beschleunigung $a_z$ durchgeführt. Die statistische Auswertung kann beispielsweise durch Mittelung oder Bestimmung der Varianz $Var(a_z)$ der Beschleunigung $a_z$ erfolgen, siehe Gleichung (3). Der Faktor h kann konstant oder abhängig vom erfassten Neigungswinkel $\alpha$ um die Querachse sein. In dieser Weiterbildung der Erfindung wird auf einer Asphaltsstrecke eine höhere Zielgeschwindigkeit der Schiebehilfe als auf einem Waldweg realisiert, weil beispielsweise ein Radfahrer der Schiebehilfe auf einer Asphaltstrecke leichter bzw. ungehindert folgen kann.

$$v_{Ziel}\left(v_{\max},\alpha,a_z\right)=v_{\max}-k\cdot|\alpha|-h\cdot Var(a_z) \qquad (3)$$

Die anschließende Regelung 250 des Elektromotors 101 wird schließlich in Abhängigkeit der ermittelten Zielgeschwindigkeit $v_{Ziel}$ durchgeführt, so dass die Geschwindigkeit der Schiebehilfe in Abhängigkeit des erfassten Neigungswinkels $\alpha$ angepasst bzw. begrenzt wird. Dies erhöht beispielsweise die Sicherheit der Schiebehilfe beim Schieben bergab.

In einer weiteren Ausgestaltung der Erfindung werden die Verfahrensschritte nach der Erkennung der Aktivierung der Schiebehilfe wiederholt durchgeführt. Durch diese Ausgestaltung wird die Geschwindigkeit bzw. das Motordrehmoment der Schiebehilfe laufend angepasst, so dass sich auch bei verändertem Neigungswinkel $\alpha$ eine für den Radfahrer komfortable Schiebehilfe ergibt.

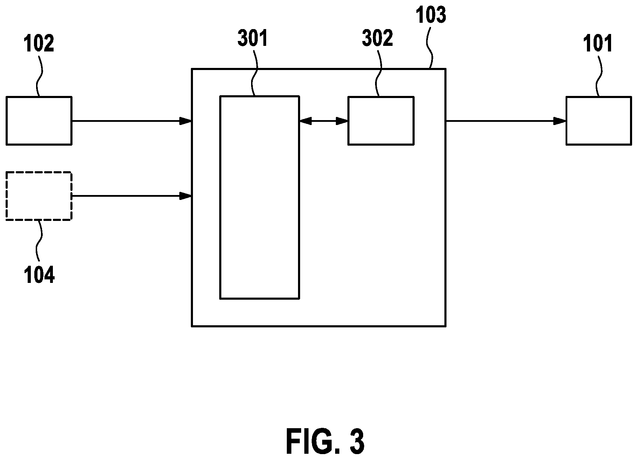

In Figur 3 ist die erfindungsgemäße Vorrichtung als Steuergerät 103 dargestellt. Das Steuergerät 103 ist dazu eingerichtet das Steuerungsverfahren zur Schiebehilfe eines Elektrofahrrads 100 durchzuführen. Das Steuergerät 103 weist eine Recheneinheit 301 sowie optional einen Speicher 302 zur Speicherung der erfassten Beschleunigungsdaten $a_z$ in Richtung der Hochachse des Elektrofahrrads 100 auf. Die Recheneinheit 301 erfasst eine den Neigungswinkel $\alpha$ des Elektrofahrrads 100 repräsentierende Größe vom Sensor 102. Optional erfasst die Recheneinheit 301 außerdem eine die Beschleunigung $a_z$ des Elektrofahrrads 100 in Richtung der Hochachse repräsentierende Größe vom Sensor 104. Die Recheneinheit 301 erzeugt in Abhängigkeit des erfassten Neigungswinkels $\alpha$ und in Abhängigkeit der erfassten Beschleunigung $a_z$ ein Steuerungssignal für den Elektromotor 101.

## Patentansprüche

1. Steuerungsverfahren zur Regelung eines Elektromotors (101) für die Schiebehilfe eines Elektrofahrrads (100) wenigstens umfassend der Schritte

   • Erkennung (210) einer Aktivierung der Schiebehilfe, und
   • Erfassung (220) eines aktuellen Neigungswinkels ($\alpha$) des Elektrofahrrads (100) bezogen auf die Querachse des Elektrofahrrads (100),
   **dadurch gekennzeichnet, dass** das Verfahren die folgenden Schritte aufweist
   • Erfassung (230) einer Beschleunigung ($a_z$) des Elektrofahrrads (100) in Richtung der Hochachse,
   • Ermittlung (240) einer Zielgeschwindigkeit ($v_{Ziel}$) in Abhängigkeit einer Maximalgeschwindigkeit ($v_{max}$) und des erfassten Neigungswinkels ($\alpha$) des Elektrofahrrads (100) und der erfassten Beschleunigung ($a_z$), und
   • Regelung (250) des Elektromotors (101) in Abhängigkeit der ermittelten Zielgeschwindigkeit ($v_{Ziel}$).

2. Vorrichtung, umfassend wenigstens eine Recheneinheit (301), welche ein Verfahren nach Anspruch 1 durchführt, wobei die Recheneinheit (301)

   • eine Aktivierung der Schiebehilfe erkennt,
   • einen aktuellen Neigungswinkel ($\alpha$) des Elektrofahrrads (100) um die Querachse des Elektrofahrrads (100) erfasst,
   • eine Beschleunigung ($a_z$) des Elektrofahrrads (100) in Richtung der Hochachse des Elektrofahrrads (100) erfasst, und

• ein Steuerungssignal für den Elektromotor (101) zur Realisierung einer Zielgeschwindigkeit ($v_{Ziel}$) in Abhängigkeit einer Maximalgeschwindigkeit ($v_{max}$) und des erfassten Neigungswinkels ($\alpha$) und der erfassten Beschleunigung ($a_z$) erzeugt.

**3.** Elektrofahrrad, umfassend wenigstens

• einen Elektromotor (101) zur Erzeugung eines Motordrehmoments (M) zum Antrieb des Elektrofahrrads (100),
• einen Sensor (102) zum Erfassen eines aktuellen Neigungswinkels ($\alpha$) des Elektrofahrrads (101) um dessen Querachse, und
• eine Vorrichtung (103) nach Anspruch 2 zur Regelung des Elektromotors (101).

**Claims**

**1.** Control method for regulating an electric motor (101) for the pushing aid of an electric bicycle (100) at least comprising the steps

• detecting (210) activation of the pushing aid, and
• detecting (220) a current inclination angle ($\alpha$) of the electric bicycle (100) with respect to the transverse axis of the electric bicycle (100), **characterized in that** the method comprises the following steps
• sensing (230) an acceleration ($a_z$) of the electric bicycle (100) in the direction of the vertical axis,
• determining (240) a target speed ($v_{ziel}$) as a function of a maximum speed ($v_{max}$) and the sensed connection angle ($\alpha$) of the electric bicycle (100) and the sensed acceleration ($a_z$),
and
• regulating (250) the electric motor (101) as a function of the determined target speed ($v_{Ziel}$).

**2.** Device comprising at least one computing unit (301) which carries out a method according to Claim 1, wherein the computing unit (301)

• detects activation of the pushing aid,
• senses a current inclination angle ($\alpha$) of the electric bicycle (100) about the transverse axis of the electric bicycle (100),
• senses an acceleration ($a_z$) of the electric bicycle (100) in the direction of the vertical axis of the electric bicycle (100) and
• generates a control signal for the electric motor (101) in order to implement a target speed ($v_{ziel}$) as a function of a maximum speed ($v_{max}$) and the sensed inclination angle ($\alpha$) and the sensed acceleration ($a_z$).

**3.** Electric bicycle comprising at least

• one electric motor (101) for generating a motor torque (M) for driving the electric bicycle (100),
• a sensor (102) for sensing a current inclination angle ($\alpha$) of the electric bicycle (101) about its transverse axis, and
• a device (103) according to Claim 2 for regulating the electric motor (101).

**Revendications**

**1.** Procédé de commande pour réguler un moteur électrique (101) pour l'aide à la poussée d'une bicyclette électrique (100), comprenant au moins les étapes

\* reconnaissance (210) d'une activation de l'aide à la poussée, et
\* détection (220) d'un angle d'inclinaison ($\alpha$) actuel de la bicyclette électrique (100) en référence à l'axe transversal de la bicyclette électrique (100), **caractérisé en ce que** le procédé comprend les étapes suivantes
\* détection (230) d'une accélération ($a_z$) de la bicyclette électrique (100) dans la direction de l'axe de hauteur,
\* détermination (240) d'une vitesse cible ($v_{Ziel}$) en fonction d'une vitesse maximale ($v_{max}$) et de l'angle d'inclinaison ($\alpha$) détecté de la bicyclette électrique (100) et de l'accélération ($a_z$) détectée, et
\* régulation (250) du moteur électrique (101) en fonction de la vitesse cible ($v_{Ziel}$) déterminée.

**2.** Dispositif, comprenant au moins une unité de calcul (301), qui met en œuvre un procédé selon la revendication 1, l'unité de calcul (301)

> \* reconnaissant une activation de l'aide à la poussée,
> \* détectant un angle d'inclinaison ($\alpha$) actuel de la bicyclette électrique (100) autour de l'axe transversal de la bicyclette électrique (100),
> \* détectant une accélération ($a_z$) de la bicyclette électrique (100) dans la direction de l'axe de hauteur de la bicyclette électrique (100), et
> \* générant un signal de commande pour le moteur électrique (101) en vue de réaliser une vitesse cible ($v_{Ziel}$) en fonction d'une vitesse maximale ($v_{max}$) et de l'angle d'inclinaison ($\alpha$) détecté et de l'accélération ($a_z$) détectée.

**3.** Bicyclette électrique comprenant au moins

> \* un moteur électrique (101) destiné à générer un couple de moteur (M) servant à la propulsion de la bicyclette électrique (100),
> \* un capteur (102) destiné à détecter un angle d'inclinaison ($\alpha$) actuel de la bicyclette électrique (101) autour de son axe transversal, et
> \* un dispositif (103) selon la revendication 2 servant à réguler le moteur électrique (101).

FIG. 1

FIG. 2

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005018126 U1
- DE 202005006684 U1
- FR 2768991 A1
- EP 1236640 A2